# EUROPEAN PATENT SPECIFICATION

(11) **EP 4 556 844 B1**
(45) Date of publication and mention of the grant of the patent: **14.01.2026**
(21) Application number: 23306972.3
(22) Date of filing: 14.11.2023
(51) Int. Cl.: G01B 11/25, G01M 11/02, G02C 7/02

(54) **METHOD FOR CHARACTERIZING AT LEAST PART OF A LENS ELEMENT**
VERFAHREN ZUR CHARAKTERISIERUNG VON MINDESTENS EINEM TEIL EINES LINSENELEMENTS
PROCÉDÉ DE CARACTÉRISATION D'AU MOINS UNE PARTIE D'UN ÉLÉMENT DE LENTILLE

(43) Date of publication of application: 21.05.2025
(73) Proprietor: Essilor International, 94220 Charenton-Le-Pont (FR)
(72) Inventor: HUGONNEAUX, Patrick, 94500 CHAMPIGNY-SUR-MARNE (FR); GUILLOT, Matthieu, 92130 ISSY LES MOULINEAUX (FR); GACOIN, Eric, 75020 PARIS (FR); CORNET, Marion, 75012 PARIS (FR); GED, Guillaume, 78180 MONTIGNY-LE-BRETONNEUX (FR); GENTY, Edouard, 75014 PARIS (FR)
(74) Representative: Cabinet Novitech

(56) References cited:
- WO-A1-2023/186763
- US-A1- 2022 100 000

## Description

### TECHNICAL FIELD

The disclosure relates to a method, for example implemented by computer means, for characterizing at least part of a lens element adapted for a wearer and comprising a plurality of optical elements, each optical element of the plurality of optical elements providing at least an optical power, for example so as to at least one of slow down, retard or prevent a progress of the abnormal refraction of the eye of the wearer.

The disclosure further relates to a method, for example implemented by computer means, for checking the conformity of a manufactured lens element adapted for a wearer and comprising a plurality of optical elements, each optical element of the plurality of optical elements providing at least an optical power so as to at least one of slow down, retard or prevent a progress of the abnormal refraction of the eye of the wearer.

The disclosure also relates to a method, for example implemented by computer means, for controlling a lens element manufacturing process for manufacturing lens elements, each lens element being adapted for a wearer and comprising a plurality of optical elements, each optical element of the plurality of optical elements providing at least an optical power so as to at least one of slow down, retard or prevent a progress of the abnormal refraction of the eye of the wearer

### BACKGROUND OF THE DISCLOSURE

Myopia of an eye is characterized by the fact that the eye focuses distant objects in front of its retina. Myopia is usually corrected using a concave lens and hypermetropia is usually corrected using a convex lens.

It has been observed that some individuals when corrected using conventional single vision optical lenses, in particular children, focus inaccurately when they observe an object which is situated at a short distance away, that is to say, in near vision conditions. Because of this focusing defect on the part of a myopic child which is corrected for his far vision, the image of an object close by is also formed behind his retina, even in the foveal area.

Such focusing defect may have an impact on the progression of myopia of such individuals. One may observe that for most of said individuals the myopia defect tends to increase over time.

Recent controlled clinical trials provided evidence of the benefit of optical elements, such as microlenses or lenslets, in the peripheral visual field to slow down myopia progression. The purpose of the optical elements is to provide an optical blurred image, in front of the retina of the wearer, triggering a stop signal to the eyes growth.

The central area of the lens element having the optical elements may be free of optical elements, to enable a good and clear vision.

Recent studies also showed that myopia progression could be slowed down by providing a slight diffusion in the periphery visual field, with arrays of small dots. The basic principle of this solution is to decrease the contrast of the eye elongation signal, in the peripheral visual field.

In the areas of the lens element comprising optical elements (like microlenses, or lenslets or dots of diffusion, or concentric rings of defocus) we can find alternance of two main areas: the "refractive areas" used to correct the myopia of the wearer, and the "defocus areas" used to control the myopia.

New optical designs propose arrays of contiguous lenslets covering the lens element, without large "refractive areas" free of optical elements: that means that each optical element creates both functions of myopia Rx correction (or create a blur acceptable for the good vision of the wearer) and myopia control defocus signal.

Different designs of contiguous optical elements have been designed with refractive designs (unifocal spherical or aspherical, bifocal microlenses) or diffractive designs (Pi-Fresnel microlenses).

As disclosed in WO2021/069443 characterizing optical elements one a lens element is challenging. WO2023/186763A1 discloses a method for characterizing at least part of a lens element adapted for a wearer and comprising a plurality of optical elements.

The new design of optical elements, such as contiguous and small diameters, or small areas inside optical elements, make the characterization even more complex.

Therefore, it appears that there is a need for a new method of characterizing at least part of a lens element adapted for a wearer and comprising a plurality of optical elements, each optical element of the plurality of optical elements providing at least an optical power, for example so as to at least one of slow down, retard or prevent a progress of the abnormal refraction of the eye of the wearer. The method should not present the drawbacks of the existing methods.

### SUMMARY OF THE DISCLOSURE

To this end, the invention proposes a method according to claim 1.

According to the invention, using a representation of the data in the form of a histogram allows an accurate and easy to implement characterization of the at least part of the lens element and in particular of at least part of the optical elements of the lens element.

The method of the disclosure allows characterizing the lens element using existing deflectometry or fringe projection profilometry measuring devices. Such measurements can be carried out very quickly and easily.

Alternatively, other deflectometry methods may be used, for example using light wave analyzer that projects a beam of light rays through the lens element and deducing from the measurement of the deviation of the light rays the local curvature of the lens element.

The method of the disclosure is particularly beneficial for simultaneous multipower design, since even if the lens element creates multiple wavefronts (for instance a wave front for order 0 and a second wavefront for order 1 for Pi-Fresnel), the method of the disclosure may be used for characterization.

According to further embodiments which can be considered alone or in combination:
- the lens element comprises a refraction area configured to provide to the wearer in standard wearing conditions, in particular for foveal vision, a first optical power based on the prescription of the wearer, the optical elements providing at least a second optical power; and/or
- the refraction area comprises a plurality of respectively independent island-shaped areas; and/or
- the refraction area is formed as the area other than the optical elements and each refraction island shape area is within one optical element; and/or
- the refraction area is formed as the area other than the areas formed of the plurality of optical elements; and/or
- the lens element comprises a refraction area configured to provide to the wearer in standard wearing conditions, in particular for foveal vision, a first optical power, the optical elements providing at least a second optical power, the first optical power and the at least second optical power being based on the prescription of the wearer; and/or
- the lens element comprises a refraction area configured to provide to the wearer in standard wearing conditions, in particular for foveal vision, a first optical power, the optical elements providing at least a second optical power, the sum of the first optical power and the at least second optical power being based on the prescription of the wearer; and/or
- the optical elements may provide simultaneously a plurality of optical functions; and/or
- the two-dimension representation of the local optical power of at least part of the lens element is obtain over a pupil having a diameter greater than or equal to 3 mm, for example greater than or equal to 4 mm, and smaller than or equal to 9 mm, for example smaller than or equal to 7 mm; and/or
- the two-dimension representation of the local optical power corresponds to at least 25%, for example at least 50%, for example at least 80%, of the surface of the lens element; and/or
- the two-dimension representation of the local optical power corresponds to at least a part of the lens element that comprises at least 10% for example at least 25%, for example at least 40%, for example at least 80% of the optical elements; and/or
- the images used for the deflectometry method consist of pixels smaller than or equal to 0.05 mm x 0.05 mm; and/or
- the method further comprises after having split the histogram, fitting the different parts of the histogram with gaussian distributions and determining the skewness and/or the kurtosis of the optical power distribution; and/or
- the method further comprises fitting the part of the histogram corresponding to first optical function with a first gaussian distribution and the part of the histogram corresponding to the optical elements with a second gaussian distribution, and characterizing at least the part of the lens element comprises at least determining the magnitude ratio at central power value of both the first and the second gaussian distribution and/or the full width at half maximum of the peak ratio of both the first and the second gaussian distribution; and/or
- the method further comprises filtering the histogram with a moving filter, for example an average filter or a lowpass filter; and/or
- the lens element has a center area free of optical elements, the two-dimension representation of the local optical power of at least part of the lens element is obtain over a pupil having its center at a distance from the optical center of the lens element greater than or equal to the sum of half the diameter of the center area of the lens element free of optical elements and half the a diameter of the pupil; and/or
- the method characterizes at least part of the optical elements within said at least part of the two-dimension representation of the lens element; and/or
- at least 50%, for example 90%, for example all, of the optical elements are refractive lenslets; and/or
- at least 50%, for example 90%, for example all, of the optical elements are diffusive lenslets; and/or
- at least 50%, for example 90%, for example all, of the optical elements are multifocal lenslets; and/or
- at least 50%, for example 90%, for example all, of the optical elements are diffractive lenslets; and/or
- the diffractive lenses are contiguous diffractive lenslets; and/or
- the method comprises:
   ∘ obtaining at least two two-dimension representation of the local optical power of at least part of the lens element using a deflectometry method at at least two different wavelengths,
   ∘ determining the optical power distribution over at least part of each of the at least two two-dimension representation of the lens element, and
   ∘ characterizing the optical elements by comparing the at least two determined optical power distribution; and/or
- one of the at least two different wavelengths correspond to the nominal wavelength of the diffractive lenslets; and/or
- the lens element comprises a refraction area having a refractive power based on the prescription for correcting an abnormal refraction of an eye of the wearer; and/or
- at least part, for example all, of the front and/or the back surface of the lens element is covered with a coating; and/or
- at least part, for example all, of the optical elements are located on the front surface of the lens element; and/or
- at least part, for example all, of the optical elements are located on the back surface of the lens element; and/or
- at least part, for example all, of the optical elements are located between the front and the back surfaces of the lens element; and/or
- characterizing at least part of the plurality of optical elements comprises at least identifying the center of at least part of the optical elements, for example using a Hough transform algorithm; and/or
- characterizing at least part of the plurality of optical elements comprises at least determining the optical power at the center of at least part of the optical elements; and/or
- characterizing at least part of the plurality of optical elements comprises at least determining the global optical power of at least part of the optical elements; and/or
- characterizing at least part of the plurality of optical elements comprises at least determining the optical cylinder value and the optical cylinder axis of at least part of the optical elements; and/or
- characterizing at least part of the plurality of optical elements comprises at least determining the peripheral optical power of at least part of the optical elements; and/or
- characterizing at least part of the plurality of optical elements comprises at least determining the asphericity of at least part of the optical elements; and/or
- characterizing at least part of the plurality of optical elements comprises at least determining the number of optical elements; and/or
- characterizing at least part of the plurality of optical elements comprises at least determining the density of optical elements; and/or
- characterizing at least part of the plurality of optical elements comprises determining the ratio of the surface of the lens element having an optical power greater than or equal to a first threshold value and smaller than or equal to a second threshold value; and/or
- characterizing at least part of the plurality of optical elements comprises at least determining the positions of the optical elements; and/or
- characterizing at least part of the plurality of optical elements comprises at least determining the size of at least part of the optical elements; and/or
- characterizing at least part of the plurality of optical elements comprises determining the optical power of the refraction around, for example in the vicinity of, the optical element and subtracting said optical power to the two-dimension representation of the local optical power; and/or
- the optical elements have a contour shape being inscribable in a circle having a diameter greater than or equal to 0.1 mm, for example greater than 0.5 mm and smaller than or equal to 7.0 mm, for example smaller than or equal to 3.0 mm; and/or
- the optical elements are positioned on a mesh; and/or
- the mesh is a structured mesh; and/or
- the optical elements are positioned along a plurality of concentric rings; and/or
- the lens element further comprises at least four optical elements organized in at least two groups of contiguous optical elements; and/or
- each group of contiguous optical element is organized in at least two concentric rings having the same center, the concentric ring of each group of contiguous optical element being defined by an inner diameter corresponding to the smallest circle that is tangent to at least one optical element of said group and an outer diameter corresponding to the largest circle that is tangent to at least one optical elements of said group; and/or
- at least part of, for example all the concentric rings of optical elements are centered on the optical center of the surface of the lens element on which said optical elements are disposed; and/or
- the concentric rings of optical elements have a diameter comprised between 9.0 mm and 60 mm; and/or
- the distance between two successive concentric rings of optical elements is greater than or equal to 0.5 mm, the distance between two successive concentric rings being defined by the difference between the outer diameter of a first concentric ring and the inner diameter of a second concentric ring, the second concentric ring being closer to the periphery of the lens element; and/or
- the optical element further comprises optical elements positioned radially between two concentric rings; and/or
- the structured mesh is a squared mesh or a hexagonal mesh or a triangle mesh or an octagonal mesh; and/or
- the mesh structure is a random mesh, for example a Voronoid mesh; and/or
- at least part, for example all, of the optical elements have a constant optical power and a discontinuous first derivative between two contiguous optical elements; and/or
- at least part, for example all, of the optical elements have a varying optical power and a continuous first derivative between two contiguous optical elements; and/or
- at least one, for example all, of the optical element has an optical function of focusing an image on a position other than the retina in standard wearing conditions; and/or
- at least one optical element has a non-spherical focused optical function in standard wearing conditions and for peripheral vision; and/or
- at least one of the optical elements has a cylindrical power; and/or
- the optical elements are configured so that along at least one, for example along all, section(s) of the lens element, for example a section passing by the optical center of the lens element, the mean sphere of optical elements increases from a point of said section towards the peripheral part of said section; and/or
- the optical elements are configured so that along at least one, for example along all, section(s) of the lens the cylinder of optical elements increases from a point of said section towards the peripheral part of said section; and/or
- the optical elements are configured so that along the at least one, for example along all, section(s) of the lens the mean sphere and/or the cylinder of optical elements increases from the center of said section towards the peripheral part of said section; and/or
- the refraction area comprises an optical center and the optical elements are configured so that along at least one, for example at least 50%, for example all, section(s) passing through the optical center of the lens the mean sphere and/or the cylinder of the optical elements increases from the optical center towards the peripheral part of the lens; and/or
- the refraction area comprises a far vision reference point, a near vision reference, and a meridian joining the far and near vision reference points, the optical elements are configured so that in standard wearing conditions along any horizontal section of the lens the mean sphere and/or the cylinder of the optical elements increases from the intersection of said horizontal section with the meridian towards the peripheral part of the lens; and/or
- the mean sphere and/or the cylinder increase functions along the sections are different depending on the position of said section along the meridian; and/or
- the mean sphere and/or the cylinder increase functions along the sections are unsymmetrical; and/or
- the optical elements are configured so that in standard wearing conditions the at least one section is a horizontal section; and/or
- the mean sphere and/or the cylinder of optical elements increases from a first point of said section towards the peripheral part of said section and decreases from a second point of said section towards the peripheral part of said section, the second point being closer to the peripheral part of said section than the first point; and/or
- the mean sphere and/or the cylinder increase function along the at least one section is a Gaussian function; and/or
- the mean sphere and/or the cylinder increase function along the at least one section is a Quadratic function; and/or
- the optical elements are configured so that the mean focus of the light rays passing through each optical element is at a same distance to the retina; and/or
- the refractive area is formed as the area other than the areas formed as the plurality of optical elements; and/or
- for every circular zone having a radius greater than or equal to 1 mm, for example greater than or equal to 2 mm, and smaller than or equal to 5 mm, for example smaller than or equal to 4 mm, comprising a geometrical center located at a distance of the framing reference that faces the pupil of the user gazing straight ahead in standard wearing conditions greater or equal to said radius + 4mm, for exemple +5 mm, for example +6 mm, the ratio between the sum of areas of the parts of optical elements located inside said circular zone and the area of said circular zone is greater than or equal to 20%, for example greater than or equal to 30% and smaller than or equal to 80%, for example smaller than or equal to 70%, for example smaller than or equal to 60%; and/or
- at least part, for example all, of the optical elements are located on the front surface of the lens element; and/or
- the at least one multifocal refraction lenslet comprises a cylindrical power; and/or
- the at least one, for example all, multifocal refractive lenslet comprises an aspherical surface, with or without any rotational symmetry; and/or
- at least one, for example all, of the optical elements is a toric refractive lenslet; and/or
- at least one multifocal refractive lenslet comprises a toric surface; and/or
- at least part, for example all, optical functions comprise high order optical aberrations.

The disclosure further relates to a method, for example implemented by computer means, for checking the conformity of a manufactured lens element adapted for a wearer and comprising a plurality of optical elements, each optical element of the plurality of optical elements providing at least an optical power so as to at least one of slow down, retard or prevent a progress of the abnormal refraction of the eye of the wearer,
wherein the method comprises:
- obtaining characterizing data relating to at least one optical characteristic of the optical elements of the lens element to be manufactured,
- characterizing the optical elements of the manufactured lens element using the method according to the disclosure,
- comparing the characteristics of the optical elements of the manufactured lens element with the characterizing data so as to check the conformity of the manufactured lens element.

The disclosure also relates to a method, for example implemented by computer means, for controlling a lens element manufacturing process for manufacturing lens elements, each lens element being adapted for a wearer and comprising a plurality of optical elements, each optical element of the plurality of optical elements providing at least an optical power so as to at least one of slow down, retard or prevent a progress of the abnormal refraction of the eye of the wearer,
wherein the method comprises the steps of:
   a) manufacturing a lens element according to a manufacturing process,
   b) determining at least one characteristic of the manufactured lens element of step a) according to the method of the disclosure,
   c) recording the difference between the determined at least one characteristic and a reference value,
   d) repeating regularly step a) to c) and checking the evolution of the difference over time,
wherein the evolution of at least one parameter of the manufacturing process used for manufacturing the lens elements is checked over time and the evolution over time of said difference is related with the evolution over time of the at least one parameter of the manufacturing process.

The disclosure further relates to a computer program product comprising one or more stored sequences of instructions that are accessible to a processor and which, when executed by the processor, causes the processor to carry out the steps of the any method of the disclosure.

The disclosure also relates to a program which makes a computer execute the method of the disclosure.

The disclosure further relates to a computer-readable storage medium having a program recorded thereon, wherein the program makes the computer execute a method according to the disclosure.

The disclosure also relates to a device comprising a processor adapted to store one or more sequence of instructions and to carry out the steps of the method according to the disclosure.

The disclosure also relates to a computer readable medium carrying one or more sequences of instructions of the computer program product according to the disclosure.

### BRIEF DESCRIPTION OF THE DRAWINGS

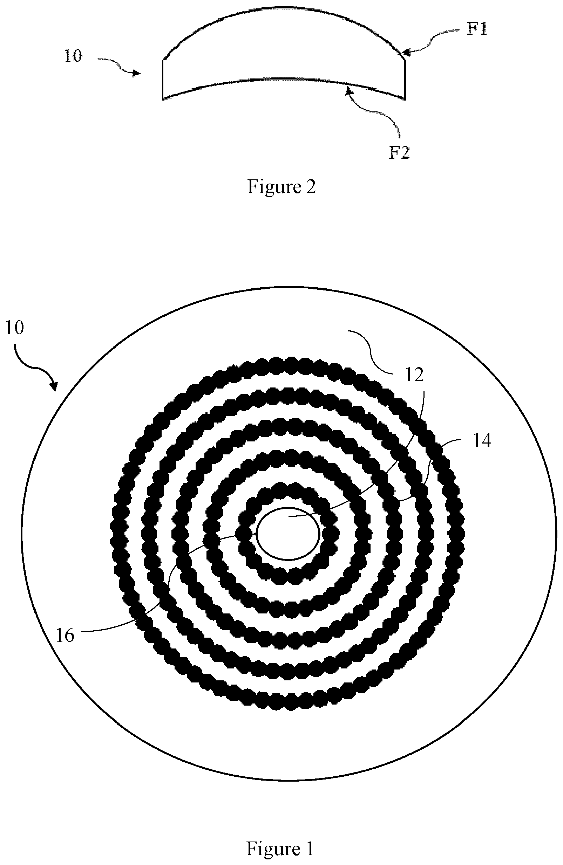

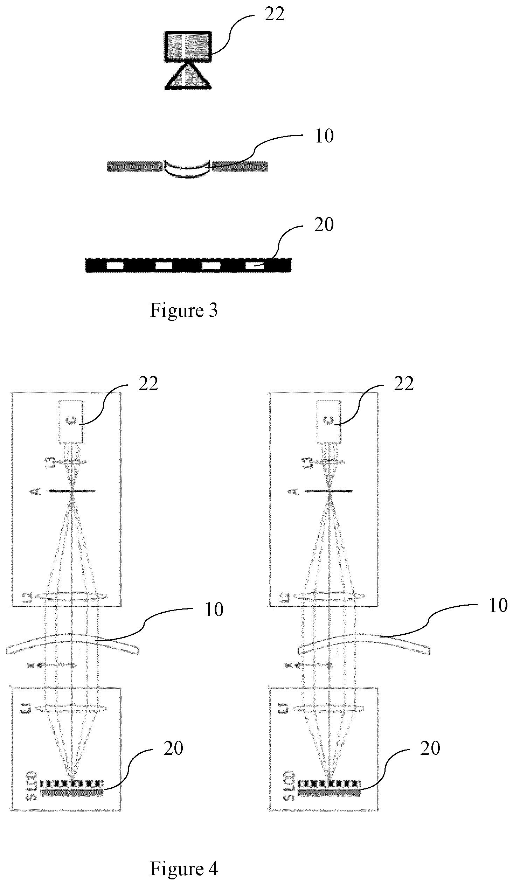

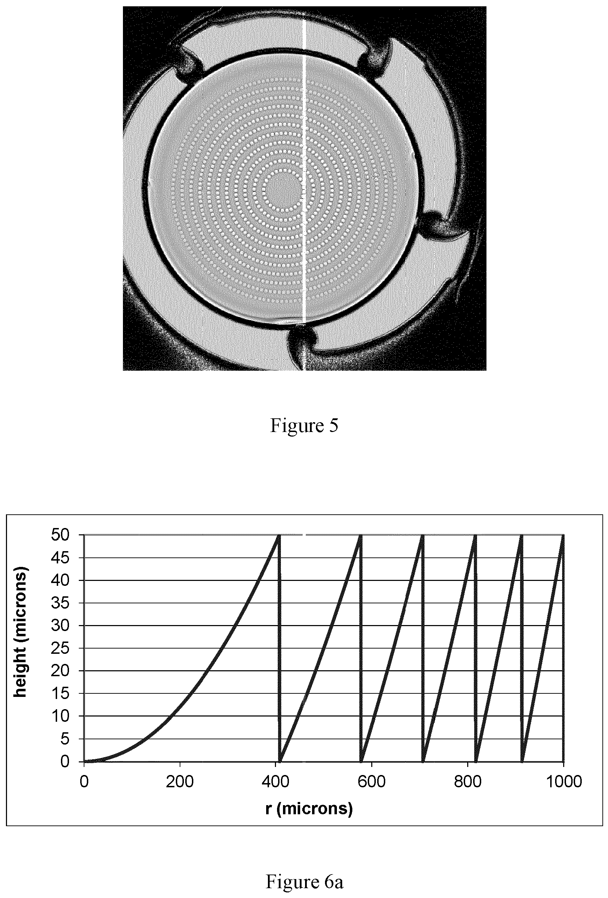

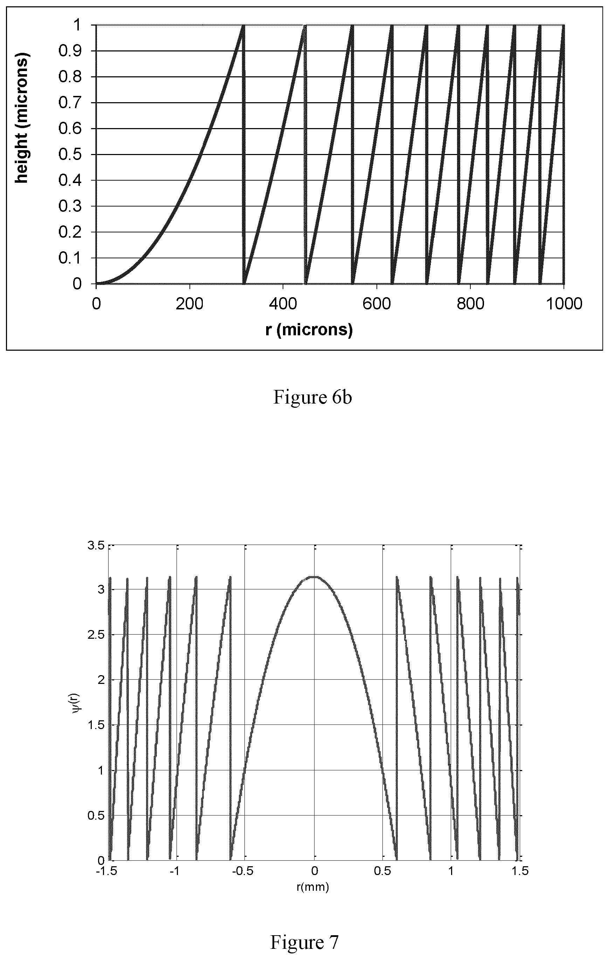

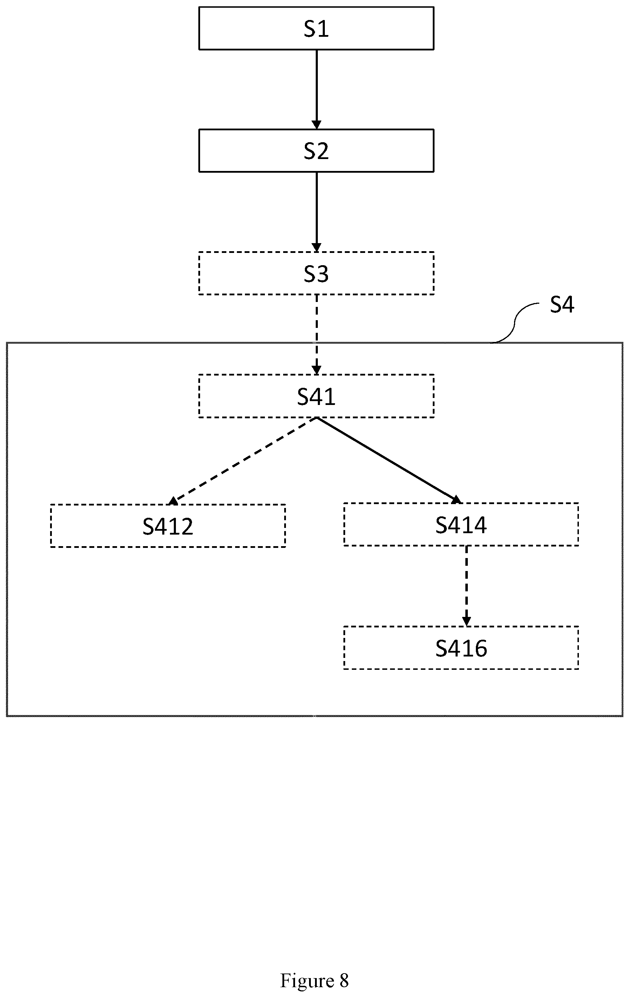

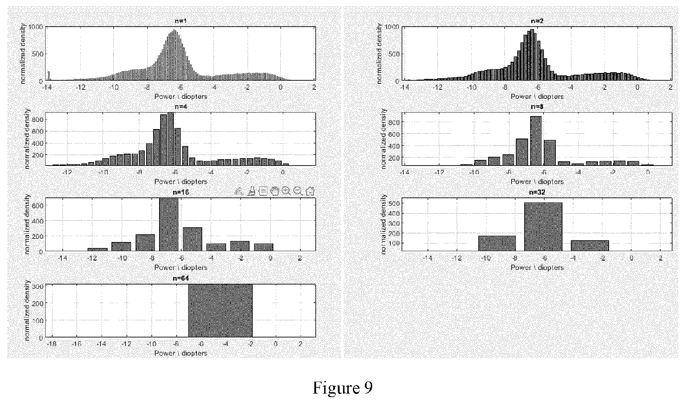

Non-limiting embodiments of the disclosure will now be described with reference to the accompanying drawing wherein:
∘ figure 1 is a plan view of a lens element that may be characterized by a method according to the disclosure;
∘ figure 2 is a general profile view of a lens element that may be characterized by a method according to the disclosure;
∘ figure 3 is a schematic representation of a fringe deflectometry device according to a first configuration;
∘ figure 4 is a schematic representation of a fringe deflectometry device according to a second configuration;
∘ figure 5 is an example of two-dimension representation of a lens element according to the disclosure;
∘ figures 6a and 6b represent examples of a diffractive lenslets radial profile;
∘ figure 7 illustrates a π-Fresnel lens radial profile; and
∘ figure 8 is a representation of the different steps of a method of the disclosure; and
∘ figure 9 illustrates the effect of bin reduction for different averaging steps n between 1 and 64.

Elements in the figures are illustrated for simplicity and clarity and have not necessarily been drawn to scale. For example, the dimensions of some of the elements in the figure may be exaggerated relative to other elements to help to improve the understanding of the embodiments of the present disclosure.

### DETAILED DESCRIPTION OF EMBODIMENTS OF THE DISCLOSURE

The disclosure relates to a lens element intended to be worn in front of an eye of a wearer.

In the reminder of the description, terms like « up », « bottom », « horizontal », « vertical », « above », « below », « front », « rear » or other words indicating relative position may be used. These terms are to be understood in the wearing conditions of the lens element.

In the context of the present disclosure, the term "lens element" can refer to an uncut optical lens or a spectacle optical lens edged to fit a specific spectacle frame or an ophthalmic lens and an optical device adapted to be positioned on the ophthalmic lens. The "lens element" in the context of the present disclosure may have a coating such as a hardcoat.

According to a preferred embodiment of the disclosure the lens element is a myopia control lens element.

The "lens element" may also refer to a transparent lens mold used to obtain an optical lens, the transparent lens mold having optical elements.

The disclosure relates at least to a method, implemented by computer means for characterizing at least part of the lens element 10.

As represented on figure 1, a lens element 10, for example a myopia control lens element, that may be characterized by the method of the disclosure may comprises:
- a refraction area 12 providing a first optical function having a refractive power based on the prescription, for example for correcting an abnormal refraction of an eye of the wearer, and
- a plurality of optical elements 14, each optical element of the plurality of optical elements providing one or more an optical functions, at least one of which is different from the first optical function, for example so as to at least one of slow down, retard or prevent a progress of the abnormal refraction of the eye of the wearer.

Typically, the refraction area providing a first optical function having a refractive power based on the prescription of the wearer.

Each optical element of the plurality of optical elements providing one or more optical functions, at least one of which is different from the first optical function.

Although not represented on figure 1, the refraction area may comprise a plurality of respectively independent island-shaped areas as illustrated in WO2021198362. The refraction area may be formed as the area other than the optical elements and each refraction island shape area is within one optical element.

The optical elements may provide different optical functions simultaneously, for example at least part of the optical elements may provide simultaneously two optical functions, such as disclosed in WO2019/206569 or WO2021/001524.The method according to the disclosure comprises obtaining a two-dimension representation of the local optical power of at least part of the lens element using deflectometry method. The method of the disclosure may use a fringe deflectometry method.

In the present disclosure, the method of the disclosure is described using a transmission fringe reflectometry. However, one of ordinary skill could easily adapt the present disclosure using other deflectometry methods, such as for example, reflection deflectometry methods or fringe projection profilometry.

As illustrated on figure 3, a fringe deflectometry method consists in positioning a lens element 10 to be characterized between an image display device 20 such as a screen and an image acquisition device 22 such as a camera. On the screen, black and white fringes are scrolled. Their scrolling is observed via the camera with a delay or acceleration which is related to the deviation of the light rays caused locally by the lens element 10.

According to an embodiment of the method of the disclosure, the distance between the screen and the lens element 10 may be of 150 mm and the distance between the screen and the image acquisition device 22 may be of 475 mm.

The deviation of the light rays is the object of an algorithm that allows putting together a mapping of the lens element with color levels or grey levels proportional to the local optical power.

So as to characterize the lens element, the inventor have proposed adapting the prior art images used in traditional fringe deflectometry methods.

The inventors have determined that to increase the accuracy of the characterization the image used for the deflectometry may consist of pixels smaller than or equal to 0.05mm x 0.05mm.

In the sense of the disclosure, the feature "image used" corresponds to the result of the transformation of the images acquired by the image acquisition device 22 by using the algorithm. In other words, the calculation is configured to generate an image calibrated to have one pixel covering 0.05 x 0.05mm.

The method of the disclosure may also be used by obtaining two-dimension representation of the local optical power using commercially available lens mapper such as the NIMO^{™} solutions proposed by the company Lambda-X.

Such solutions are commercially proposed for mapping contact lenses and may require adaptation for larger lenses such as spectacle lenses.

In such a case, the lens element is located in the horizontal plane of the measuring device and can be shifted in the different x- and y- directions as illustrated on figure 4. In the case of the Nimo solutions, the optical center of the lens element is not systematically aligned with the collimated measurement beam. Furthermore, on the current version of the Nimo solutions, there is no gripper allowing to center the lens element, thus the inventors propose to use the raw view of the fringe pattern visible in real time thanks to the camera video mode and ensure it is centred.

As explained in WO2021/069443, there is a very strong correlation between the gray levels of the phase derivative images obtained by a deflectometry method and the optical power values obtained by the surface measurements when such surface measurements are possible.

Therefore, it is clear that a deflectometry method allows obtaining an accurate two-dimension representation of the local power of at least part of the lens element.

Advantageously, a deflectometry method, for example the fringe deflectrometry method, is much easier, cheaper and shorter to implement than the surface measurement.

Furthermore, the method of the disclosure allows characterizing at least part of a lens element, in particular at least part of the optical elements of the optical lens, even when said optical elements are not on one of the front or rear surface of the lens element, for example between the front and rear surface and/or are diffractive optical elements.

As illustrated on figure 3, the lens element 10 may be positioned on a support, with its convex face towards the screen 20. On the screen a diffuser that reduces the noise on the final result may be placed and a wavelength filter may also be placed on the screen, in particular when the optical elements are diffractive lenslets.

Images of the fringes displayed on screen as seen through the lens element 10 are recorded by the camera 22.

Figure 5 illustrates an example of an optical power map that may be obtained by the fringe deflectometry method of the disclosure.

The two-dimension representation of the local optical power may be obtained using a pupil diameter greater than or equal to 3, for example greater than or equal to 4 mm and smaller than or equal to 9 mm, for example smaller than or equal to 7 mm.

The two-dimension representation of the local optical power corresponds to at least 25%, for example at least 50%, for example at least 80%, of the surface of the lens element.

The method of the disclosure may advantageously be used to characterize at least part of the optical elements or at least part of the lens element comprising optical elements. Therefore, the two-dimension representation of the local optical power may correspond to at least a part of the lens element that comprises at least 10% for example at least 25%, for example at least 40%, for example at least 80% of the optical elements.

The method according to the disclosure may be used to characterize at least part of lenses element having a plurality of optical elements have a wide variety of positions and optical functions. Different examples of lens elements with different types of optical elements are described here. The method of the disclosure may be used to determine different features of at least part of the lens element for example depending on the configuration of the optical elements.

According to the method of the disclosure at least part, for example all, of the two-dimension representation of the at least part of the lens element obtained by a deflectometry method is used to determine the optical power distribution over at least part of the two-dimension representation of the lens element.

The optical power distribution may be obtained based over at least part of the two-dimension representation of the local power, on the number of pixels for each shade of gray. For storage and calculation purposes the two-dimension representation comprises typically 256 different shades of gray.

Each shade of gray may be converted into a value of local power. Therefore, allowing to obtain an optical power distribution over at least part of the two-dimension representation of the lens element.

The lens element, for example the optical elements of the lens element, are characterized by analyzing the determined optical power distribution.

The method of the disclosure may be used to characterize lens elements having different configurations. The following description illustrates the possible configuration for which the method of the disclosure may be particularly useful.

The lens element may comprise a refraction area 12 configured to provide to the wearer in standard wearing conditions, in particular for foveal vision, a first optical power based on the prescription of the wearer, for example for correcting an abnormal refraction of said eye of the wearer.

The wearing conditions are to be understood as the position of the lens element with relation to the eye of a wearer, for example defined by a pantoscopic angle, a Cornea to lens distance, a Pupil-cornea distance, a center of rotation of the eye (CRE) to pupil distance, a CRE to lens distance and a wrap angle.

The Cornea to lens distance is the distance along the visual axis of the eye in the primary position (usually taken to be the horizontal) between the cornea and the back surface of the lens; for example equal to 12mm.

The Pupil-cornea distance is the distance along the visual axis of the eye between its pupil and cornea; usually equal to 2mm.

The CRE to pupil distance is the distance along the visual axis of the eye between its center of rotation (CRE) and cornea; for example equal to 11.5mm.

The CRE to lens distance is the distance along the visual axis of the eye in the primary position (usually taken to be the horizontal) between the CRE of the eye and the back surface of the lens, for example equal to 25.5mm.

The pantoscopic angle is the angle in the vertical plane, at the intersection between the back surface of the lens and the visual axis of the eye in the primary position (usually taken to be the horizontal), between the normal to the back surface of the lens and the visual axis of the eye in the primary position; for example, equal to -8°.

The wrap angle is the angle in the horizontal plane, at the intersection between the back surface of the lens and the visual axis of the eye in the primary position (usually taken to be the horizontal), between the normal to the back surface of the lens and the visual axis of the eye in the primary position for example equal to 0°.

An example of standard wearer condition may be defined by a pantoscopic angle of -8°, a Cornea to lens distance of 12 mm, a Pupil-cornea distance of 2 mm, a CRE to pupil distance of 11.5 mm, a CRE to lens distance of 25.5 mm and a wrap angle of 0°.

The term "prescription" is to be understood to mean a set of optical characteristics of optical power, of astigmatism, of prismatic deviation, determined by an ophthalmologist or optometrist in order to correct the vision defects of the eye, for example by means of a lens positioned in front of his eye. For example, the prescription for a myopic eye comprises the values of optical power and of astigmatism with an axis for the distance vision.

The refractive area may have a continuous variation of optical power. For example, the optical area may have a progressive addition design.

At least one, for example at least 50%, for example at least 95%, preferably all of the, optical element of the plurality of optical elements 14, have at least one optical function of not focusing an image on the retina of the eye of the wearer, in particular for peripheral vision and preferably for central and peripheral vision.

For example, each optical element of the plurality of optical elements is transparent over the whole visible spectrum.

For example, at least one, preferably all of the, optical element of the plurality of optical elements 14, has at least one optical function of focusing an image in front of the retina.

In the sense of the disclosure "focusing" is to be understood as producing a focusing spot with a circular section that can be reduced to a point in the focal plane.

Advantageously, such optical function of the optical element reduces the deformation of the retina of the eye of the wearer in peripheral vision, allowing to slow down the progression of the abnormal refraction of the eye of the wearer wearing the lens element.

According to the disclosure, the optical elements may have specific sizes. In particular, the optical elements may have a contour shape being inscribable in a circle having a diameter greater than or equal to 0.1 mm and smaller than or equal to 7.0 mm, preferably greater than or equal to 1.0 mm and smaller than 3.0 mm, for example smaller than 2.0 mm.

The optical elements may be positioned on a mesh.

The mesh on which the optical elements are positioned may be a structured mesh as illustrated in WO2021/069443.

As illustrated on figure 2, a lens element 10 according to the disclosure comprises an object side surface F1, for example formed as a convex curved surface toward an object side, and an eye side surface F2 for example formed as a concave surface having a different curvature than the curvature of the object side surface F1.

At least part, for example all, of the optical elements may be located on the front surface of the lens element.

At least part, for example all, of the optical elements may be located on the back surface of the lens element.

At least part, for example all, of the optical elements may be located between the front and back surfaces of the lens element. For example, the lens element may comprise zones of different refractive indexes forming the optical elements.

At least one of the optical elements may have an optical function of focusing an image for peripheral vision on a position other than the retina.

Preferably, at least 50%, for example at least 80%, for example all, of the optical elements may have an optical function of focusing an image for peripheral vision on a position other than the retina.

All of the optical elements may be configured so that the mean focus of the light rays passing through each optical element is at a same distance to the retina of the wearer, at least for peripheral vision.

The optical function, in particular the dioptric function, of each optical element may be optimized so as to provide a focus image, in particular in peripheral vision, at a constant distance of the retina of the eye of the wearer. Such optimization requires adapting the dioptric function of each of the optical element depending on their position on the lens element.

The optical elements may be configured so that at least along one section of the lens the mean sphere of the optical elements increases from a point of said section towards the periphery of said section.

At least part of the optical elements, for example at least 50%, for example all of the optical elements are mutifocal lenslets. Advantageously, such multifocal lenslet may have a first optical power corresponding to the prescription and a second optical power different from the first optical power so as to focus light other than on the retina of the wearer.

According to an alternative of the disclosure, at least 50%, for example all of the optical elements are diffractive lenslets, for example contiguous diffractive lenslets.

In the context of the present disclosure, two optical elements are to be considered contiguous if there is a path linking the two optical elements all along which one may measure in standard wearing conditions at least one optical power different from the optical power based on the prescription of the wearer, for example for correcting an abnormal refraction of the eye of the wearer.

According to an embodiment of the disclosure, at least one, for example all of the optical elements, has discontinuities, such as a discontinuous surface, for example Fresnel surfaces and/or having a refractive index profile with discontinuities.

Figure 6a represents an example of a first diffractive lens radial profile of a contiguous optical element that may be used for the disclosure.

Figure 6b represents an example of a second diffractive lens radial profile of a contiguous optical element that may be used for the disclosure.

The diffractive lenslet may be a Fresnel lenslet whose phase function ψ(r) has π phase jumps at the nominal wavelength λ₀, as seen in Figure 7. One may give these structures the name "π-Fresnel lenses" for clarity's sake, as opposition to unifocal Fresnel lenses whose phase jumps are multiple values of 2π. The π-Fresnel lens whose phase function is displayed in Figure 5 diffracts light mainly in two diffraction orders (order 0 and +1) associated to dioptric powers P(λ₀) = 0 δ and a positive one, for example P(λ₀) = 3 δ, with λ₀ = 550 nm.

An advantage of this design is that the diffraction order dedicated to the prescription of the wearer is not chromatic whereas the one used to provide the second optical function to slow down myopia progression is very chromatic.

A typical size for the optical element is greater than or equal to 2mm and smaller than or equal to 2.5mm. Indeed, the inventors have observed that maintaining an optical element size smaller than the wearer eye pupil size is advantageous.

For example, the diffraction efficiency of the 0 and +1 orders is of about 40% at the nominal wavelength λ₀.

To increase the efficiency of the diffraction order corresponding to the wearer prescription one may consider the following:
To increase the efficiency of the diffraction order 0 one may decrease the value of λ₀. Figure 8a shows the diffraction efficiencies with λ₀ = 550nm and figure 8b shows the diffraction efficiencies if λ₀ = 400nm. One can notice that in this case, the diffraction efficiency of order 0 is generally higher, whereas the efficiency of order +1 is lower, on the whole visible spectrum. In this case the dioptric power of the refractive phase function to which we apply the phase jumps should be equal to 1.5*400/550 ≈ 1.1 δ for λ₀ = 550 nm instead of 1.5 δ in Figure 8a. This results in a widening of the rings of Figure 7.

One may in addition or alternatively set to zero one ring out of two of the configurations illustrated on Figure 7. In this case, the simultaneously bifocal function still exists due to the remaining Fresnel rings, while the rings set to 0 induce a more important proportion of 0δ dioptric power.

One may further consider applying Fresnel structures made of two materials with two different refraction indices and different Abbe numbers to obtain the phase function of Figure 7 at λ = λ₀ and to get more homogeneous efficiencies on the visible spectrum and/or to privilege one of the two main diffraction orders in relation to the other.

Other combinations with superimposed Fresnel structures could be considered.

The method of the disclosure is particularly useful to characterize at least part of a lens element comprising a plurality of diffractive lenslet, in particular when comprised between the front and back surfaces of the lens element.

As illustrated on figure 8, the method of the disclosure comprises at least:
- a two dimension representation obtaining step S1,
- an optical power distribution determination step S2, and
- a characterizing step S4.

During the two-dimension representation obtaining step S1, a two-dimension representation of the local optical power of at least part of the lens element is obtained using a deflectometry method or fringe projection profilometry. The use of a deflectometry method has been detailed previously. The skilled person may adapt the description to the use of fringe projection profilometry.

During the optical power distribution determination step S2, the optical power distribution over at least part of the two-dimension representation of the lens element in the form of a representation of the data as a histogram or a stem-and-leaf plot is determined.

For example, the NIMO^{™} device produces curves of pixel counts according to power. Each curve has a length of approximately 2x100 values: a vector of powers and a vector of pixel counts. It is possible to work over an average of different histograms. If this option is chosen, it is preferable, before averaging, to linearly interpolate each separate histogram on a same common power domain with a coherent step.

As illustrated on figure 8, further to the optical power distribution determination step S2, the method may comprise a filtering step S3.

During the filtering step S3, the histogram or stem-and-leaf plot is filtered with a moving filter, for example an average filter or a lowpass filter.

Indeed, the data obtained from the optical power distribution determination step S2 may still be noisy. In order to smooth the results, it may be advantageous to use a moving average filter. The filtered curve is then used for segmentation of the full histogram.

During the characterizing step S4, at least the part of the lens element within said at least part of the two-dimension representation of the lens element is characterized by analyzing the representation of the data, for example characterizing the histogram or stem-and-leaf plot.

The characterization of at least the part of the lens element may comprise a splitting step S41. During the splitting step S41, the histogram or stem-and-leaf plot obtain during step S2 based on identified inflexion points is split. The point is to separate the histogram or stem-and-leaf plot according to the inflexion point between the refraction are peak and the optical elements peak. In order to do so, the inventors propose to use a filter that detects a local minimum of the smoothed histogram or stem-and-leaf plot.

As illustrated on figure 8, the method according to the disclosure may further comprise after the splitting step S41, a fitting step S412. During the fitting step S412, the different parts of the histogram or stem-and-leaf plot are fitted with gaussian distributions the skewness and/or the kurtosis of the optical power distribution are determined.

The method of the disclosure may comprise after the splitting step S41, a processed histogram determining step S414. During the processed histogram determining step S414, a processed histogram is determined by increasing the size of the bins of the histogram until the different parts of the histogram have a symmetrical distribution and the number of bins of the histogram is greater than or equal to 15 and smaller than or equal to 36.

It is not always possible to have access to original data measured by the instrument, in particular with commercially available instruments. Therefore, it is not always possible to easily recalculate the bins used for the histograms. The inventors propose to overcome such limitation to work on local average of the values. One can re-express the curves according to different fix averaging steps and thus recreate processed histograms describing the pixel count according to power. By doing this operation one is no longer working on pixel exact summation but rather on average pixel number. This bin reduction has the effect of deprecating the power resolution of the initial histogram. Such deprecation is illustrated on figure 9.

Further to the processed histogram determining step S414, the method according to the disclosure may comprise a second fitting step S416.

During the second fitting step S416, the part of the histogram corresponding to first optical function is fitted with a first gaussian distribution and the part of the histogram corresponding to the optical elements is fitted with a second gaussian distribution.

To fit the refraction area peak and the joint junction peak, the inventors propose to use a least square fit adjustment, for example in Matlab to fit a Gaussian curve to the joint peak. One may recover from that a magnitude, a central power and a standard deviation. Alternatively, one may fit the data with two gaussians rather than one and get central values for each peak. However, the difference in mean value may be rather small (below 0.06 D) and the use of a unique Gaussian fit is statistically stronger according to the number of points available.

For the optical elements peak, a simple fit can be derived from the optical elements peak to produce the same three parameters that were described before: average, magnitude and standard deviation.

Characterizing at least the part of the lens element may comprise at least determining the magnitude ratio at central power value of both the first and the second gaussian distribution and/or the full width at half maximum of the peak ratio of both the first and the second gaussian distribution.

Such parameters are good indicators of the respect of the design of the lens element and allow easy comparison between lens elements.

The method of the disclosure is particularly interesting to evaluate quickly the respect of the global design, and to quickly compare the lens elements, for example optical lenses, of different batches.

The method of the disclosure may be implemented to characterize a lens element comprising contiguous aspherical lenslets.

The optical power distribution of at least part of a lens element comprising contiguous aspherical lenslets comprises only one peak around the global power of the lenslets, so depending on the curvature of these aspherical lenslets. Such peak is quite much less "symmetrical" than the one of the optical power distribution obtained with contiguous spherical lenslets, more spread on the left of the peak, which is due to the aspherical profile with a reduction of power with the eccentricity of the lenslets.

Therefore, the positioning of the peak, shape and width of the peak are good indicators of the respect of the design of the lenslets.

The method according to the disclosure provides a way of easily differentiating spherical and aspherical lenslets design: symmetrical peak for spherical vs asymmetrical peak for aspherical.

The method of the disclosure may be used to characterize lens elements having aspherical lenslet position on concentric circles as illustrated on figure 1 and disclosed in greater details in WO2019/166659.

More generally, positioning of the different peaks, shape and width are good indicators of the respect of the design of the lenslets and of the Rx area. The method of the disclosure is also a good solution to easily compare different lens elements of one batch in production, which could allow to limit the number of lens elements that are to be measured in great detail.

The method of the disclosure may be used to check the conformity of a manufactured lens element. Indeed, by comparing the characteristics of the optical elements of a manufactured lens element with the characterizing data of a reference optical lens, it is possible to easily check the conformity of the manufactured lens element.

The method of the disclosure may also be used for controlling a lens manufacturing process, in particular by checking the evolution over time of the some of the characteristics determined on the manufactured lens using the method of the disclosure.

One may relate so evolution over time of some of the determined feature with at least one parameter of the manufacturing process. Advantageously, having an easy, cheap and non-destructive allows to easily implement a process control.

The disclosure has been described above with the aid of embodiments. Many further modifications and variations will be apparent to those skilled in the art upon making reference to the foregoing illustrative embodiments, which are given by way of example only and which are not intended to limit the scope of the disclosure, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the disclosure.

## Claims

1. Method for characterizing at least part of a lens element, for example a myopia control lens element, said lens element being adapted for a wearer and providing a first optical function having a refractive power based on the prescription of the wearer, and comprising a plurality of optical elements, each optical element of the plurality of optical elements providing one or more optical functions, at least one of which is different from the first optical function;
wherein the method comprises:
- obtaining (S1) a two-dimensional representation of the local optical power of at least part of the lens element using a deflectometry method or fringe projection profilometry,
- determining (S2) the optical power distribution over at least part of the two-dimensional representation of the lens element in the form of a representation of the data as a histogram; and
- characterizing (S4) at least the part of the lens element within said at least part of the two-dimensional representation of the lens element by analyzing the representation of the data, for example characterizing the histogram,
wherein characterizing at least the part of the lens element comprises splitting (S41) the histogram based on identified inflexion points and the method further comprises determining (S414) a processed histogram by increasing the size of the bins of the histogram until the different parts of the histogram have a symmetrical distribution and the number of bins of the histogram is greater than or equal to 15 and smaller than or equal to 36.

2. The method according to claim 1, wherein the two-dimensional representation of the local optical power corresponds to at least 25%, of the surface of the lens element.

3. The method according to any of the preceding claims, wherein the two-dimensional representation of the local optical power corresponds to at least a part of the lens element that comprises at least 10 % of the optical elements.

4. The method according to any of the preceding claims, wherein the images used for the deflectometry method consist of pixels smaller than or equal to 0.05 mm x 0.05 mm.

5. The method according to the claim 1, wherein the method further comprises after having split the histogram, fitting (S412) the different parts of the histogram with gaussian distributions and determining the skewness and/or the kurtosis of the optical power distribution.

6. The method according to claim 1, wherein the method further comprises fitting (S416) the part of the histogram corresponding to first optical function with a first gaussian distribution and the part of the histogram corresponding to the optical elements with a second gaussian distribution, and characterizing at least the part of the lens element comprises at least determining the magnitude ratio at central power value of both the first and the second gaussian distribution and/or the full width at half maximum of the peak ratio of both the first and the second gaussian distribution.

7. The method according to any of the preceding claims, wherein the method further comprises filtering the histogram with a moving filter.

8. The method according to any of the preceding claims, wherein at least 50% of the optical elements are refractive lenslets.

9. The method according to any of the preceding claims, wherein at least 50% of the optical elements are diffusive lenslets or diffractive lenslets.

10. The method according to any of the preceding claims, wherein the two-dimensional representation of the local optical power of at least part of the lens element is obtained over a pupil having a diameter greater than or equal to 3 mm, and smaller than or equal to 9 mm.

11. The method according to the preceding claims, wherein the lens element has a center area free of optical elements, the two-dimensional representation of the local optical power of at least part of the lens element is obtained over a pupil having its center at a distance from the optical center of the lens element greater than or equal to the sum of half the diameter of the center area of the lens element free of optical elements and half the a diameter of the pupil.

12. Method for checking the conformity of a manufactured lens element adapted for a wearer and comprising a plurality of optical elements, each optical element of the plurality of optical elements providing at least an optical power so as to at least one of slow down, retard or prevent a progress of the abnormal refraction of the eye of the wearer,
wherein the method comprises:
- obtaining characterizing data relating to at least one optical characteristic of the optical elements of the lens element to be manufactured,
- characterizing the optical elements of the manufactured lens element using the method of any of claims 1 to 11,
- comparing the characteristics of the optical elements of the manufactured lens element with the characterizing data so as to check the conformity of the manufactured lens element.

13. Method for controlling a lens element manufacturing process for manufacturing lens elements, each lens element being adapted for a wearer and comprising a plurality of optical elements, each optical element of the plurality of optical elements providing at least an optical power so as to at least one of slow down, retard or prevent a progress of the abnormal refraction of the eye of the wearer, wherein the method comprises the steps of:
a) manufacturing a lens element according to a manufacturing process,
b) determining at least one characteristic of the manufactured lens element of step a) according to the method of any of the claims 1 to 11,
c) recording the difference between the determined at least one characteristic and a reference value,
d) repeating regularly step a) to c) and checking the evolution of the difference over time,
wherein the evolution of at least one parameter of the manufacturing process used for manufacturing the lens elements is checked over time and the evolution over time of said difference is related with the evolution over time of the at least one parameter of the manufacturing process.

## Patentansprüche

1. Verfahren zum Charakterisieren mindestens eines Teils eines Linsenelements, zum Beispiel eines Myopie-Bekämpfungslinsenelements, wobei das Linsenelement für einen Träger adaptiert ist und eine erste optische Funktion mit einer Brechkraft basierend auf der Verordnung des Trägers bereitstellt und eine Vielzahl von optischen Elementen umfasst, wobei jedes optische Element der Vielzahl von optischen Elementen eine oder mehrere optische Funktionen bereitstellt, von denen mindestens eine von der ersten optischen Funktion verschieden ist; wobei das Verfahren umfasst:
- Erhalten (S1) einer zweidimensionalen Darstellung der lokalen Brechkraft von mindestens einem Teil des Linsenelements unter Verwendung eines Deflektometrieverfahrens oder einer Streifenprojektionsprofilometrie,
- Bestimmen (S2) der Brechkraftverteilung über mindestens einen Teil der zweidimensionalen Darstellung des Linsenelements in Form einer Darstellung der Daten als Histogramm; und
- Charakterisieren (S4) von mindestens dem Teil des Linsenelements innerhalb des mindestens einen Teils der zweidimensionalen Darstellung des Linsenelements durch Analysieren der Darstellung der Daten, zum Beispiel Charakterisieren des Histogramms,
wobei Charakterisieren von mindestens dem Teil des Linsenelements Aufteilen (S41) des Histogramms basierend auf identifizierten Inflexionspunkten umfasst, und das Verfahren ferner Bestimmen (S414) eines verarbeiteten Histogramms durch Erhöhen der Größe der Bins des Histogramms umfasst, bis die verschiedenen Teile des Histogramms eine symmetrische Verteilung aufweisen und die Anzahl von Bins des Histogramms größer als oder gleich 15 und kleiner als oder gleich 36 ist.

2. Verfahren nach Anspruch 1, wobei die zweidimensionale Darstellung der lokalen Brechkraft mindestens 25 % der Oberfläche des Linsenelements entspricht.

3. Verfahren nach einem der vorhergehenden Ansprüche, wobei die zweidimensionale Darstellung der lokalen Brechkraft von mindestens einem Teil des Linsenelements entspricht, der mindestens 10 % der optischen Elemente umfasst.

4. Verfahren nach einem der vorhergehenden Ansprüche, wobei die Bilder, die für das Deflektometrieverfahren verwendet werden, aus Pixeln bestehen, die kleiner als oder gleich 0,05 mm x 0,05 mm sind.

5. Verfahren nach Anspruch 1, wobei das Verfahren ferner nach dem Aufteilen des Histogramms Anpassen (S412) der verschiedenen Teile des Histogramms mit Gauß-Verteilungen und Bestimmen der Schiefe und/oder Wölbung der Brechkraftverteilung umfasst.

6. Verfahren nach Anspruch 1, wobei das Verfahren ferner Anpassen (S416) des Teils des Histogramms, der einer ersten optischen Funktion entspricht, mit einer ersten Gauß-Verteilung und des Teils des Histogramms, der den optischen Elementen entspricht, mit einer zweiten Gauß-Verteilung umfasst, und Charakterisieren von mindestens dem Teil des Linsenelements mindestens Bestimmen des Größenverhältnisses bei einem zentralen Kraftwert sowohl der ersten als auch der zweiten Gauß-Verteilung und/oder der Halbwertsbreite des Spitzenverhältnisses sowohl der ersten als auch der zweiten Gauß-Verteilung umfasst.

7. Verfahren nach einem der vorhergehenden Ansprüche, wobei das Verfahren ferner Filtern des Histogramms mit einem gleitenden Filter umfasst.

8. Verfahren nach einem der vorhergehenden Ansprüche, wobei mindestens 50 % der optischen Elemente refraktive Mikrolinsen sind.

9. Verfahren nach einem der vorhergehenden Ansprüche, wobei mindestens 50 % der optischen Elemente diffusive Lenslets oder refraktive Mikrolinsen sind.

10. Verfahren nach einem der vorhergehenden Ansprüche, wobei die zweidimensionale Darstellung der lokalen Brechkraft von mindestens einem Teil des Linsenelements über einer Pupille mit einem Durchmesser größer als oder gleich 3 mm und kleiner als oder gleich 9 mm erhalten wird.

11. Verfahren nach den vorhergehenden Ansprüchen, wobei das Linsenelement einen Mittelbereich aufweist, der frei von optischen Elementen ist, wobei die zweidimensionale Darstellung der lokalen Brechkraft von mindestens einem Teil des Linsenelements über einer Pupille erhalten wird, deren Mitte in einem Abstand von der optischen Mitte des Linsenelements ist, der größer oder gleich der Summe aus dem halben Durchmesser des von optischen Elementen freien Mittelbereichs des Linsenelements und dem halben Durchmesser der Pupille ist.

12. Verfahren zum Prüfen der Konformität eines gefertigten Linsenelements, das für einen Träger adaptiert ist und eine Vielzahl von optischen Elementen umfasst, wobei jedes optische Element der Vielzahl von optischen Elementen mindestens eine Brechkraft bereitstellt, um eine Progression der abnormalen Brechung des Auges des Trägers mindestens zu verlangsamen, zu verzögern oder dieser vorzubeugen,
wobei das Verfahren umfasst:
- Erhalten von Charakterisierungsdaten, die sich auf mindestens eine optische Charakteristik der optischen Elemente des zu fertigenden Linsenelements beziehen,
- Charakterisieren der optischen Elemente des gefertigten Linsenelements unter Verwendung des Verfahrens nach einem der Ansprüche 1 bis 11,
- Vergleichen der Charakteristika der optischen Elemente des gefertigten Linsenelements mit den Charakterisierungsdaten, um die Konformität des gefertigten Linsenelements zu prüfen.

13. Verfahren zum Steuern eines Linsenelementfertigungsprozesses zum Fertigen von Linsenelementen, wobei jedes Linsenelement für einen Träger adaptiert wird und eine Vielzahl von optischen Elementen umfasst, wobei jedes optische Element der Vielzahl von optischen Elementen mindestens eine Brechkraft bereitstellt, um Progression der abnormalen Brechung des Auges des Trägers mindestens zu verlangsamen, zu verzögern oder dieser vorzubeugen, wobei das Verfahren die folgenden Schritte umfasst:
a) Fertigen eines Linsenelements gemäß einem Fertigungsprozess,
b) Bestimmen mindestens einer Charakteristik des gefertigten Linsenelements aus Schritt a) gemäß dem Verfahren nach einem der Ansprüche 1 bis 11,
c) Aufzeichnen der Differenz zwischen der bestimmten mindestens einen Charakteristik und einem Referenzwert,
d) regelmäßiges Wiederholen von Schritt a) bis c) und Prüfen der Entwicklung der Differenz im Zeitverlauf,
wobei die Entwicklung mindestens eines Parameters des Fertigungsprozesses, der zum Fertigen der Linsenelemente verwendet wird, im Zeitverlauf geprüft wird und die zeitliche Entwicklung der Differenz mit der zeitlichen Entwicklung des mindestens einen Parameters des Fertigungsprozesses in Beziehung steht.

## Revendications

1. Procédé destiné à caractériser au moins une partie d'un élément faisant lentille, par exemple d'un élément faisant lentille de contrôle de la myopie, ledit élément faisant lentille étant adapté à un porteur et assurant une première fonction optique ayant une puissance réfractive basée sur la prescription du porteur, et comprenant une pluralité d'éléments optiques, chaque élément optique de la pluralité d'éléments optiques assurant une ou plusieurs fonctions optiques, dont au moins une est différente de la première fonction optique ;
dans lequel le procédé comprend :
- l'obtention (S1) d'une représentation bidimensionnelle de la puissance optique locale d'au moins une partie de l'élément faisant lentille au moyen d'un procédé de déflectométrie ou de profilométrie par projection de franges ;
- la détermination (S2) de la distribution de puissance optique sur au moins une partie de la représentation bidimensionnelle de l'élément faisant lentille sous la forme d'une représentation des données sous forme d'histogramme ; et
- la caractérisation (S4) au moins de la partie de l'élément faisant lentille à l'intérieur de ladite au moins une partie de la représentation bidimensionnelle de l'élément faisant lentille par analyse de la représentation des données, par exemple caractérisation de l'histogramme,
dans lequel la caractérisation au moins de la partie de l'élément faisant lentille comprend la division (S41) de l'histogramme sur la base de points d'inflexion identifiés et le procédé comprend en outre la détermination (S414) d'un histogramme traité par augmentation de la taille des intervalles de l'histogramme jusqu'à ce que les différentes parties de l'histogramme aient une distribution symétrique et le nombre d'intervalles de l'histogramme soit supérieur ou égal à 15 et inférieur ou égal à 36.

2. Procédé selon la revendication 1, dans lequel la représentation bidimensionnelle de la puissance optique locale correspond à au moins 25 % de la surface de l'élément faisant lentille.

3. Procédé selon l'une quelconque des revendications précédentes, dans lequel la représentation bidimensionnelle de la puissance optique locale correspond à au moins une partie de l'élément faisant lentille qui comprend au moins 10 % des éléments optiques.

4. Procédé selon l'une quelconque des revendications précédentes, dans lequel les images utilisées pour le procédé de déflectométrie sont constituées de pixels de taille inférieure ou égale à 0,05 mm x 0,05 mm.

5. Procédé selon la revendication 1, dans lequel le procédé comprend en outre, après la division de l'histogramme, le lissage (S412) des différentes parties de l'histogramme avec des distributions gaussiennes et la détermination de l'asymétrie et/ou de l'aplatissement de la distribution de puissance optique.

6. Procédé selon la revendication 1, dans lequel le procédé comprend en outre le lissage (S416) de la partie de l'histogramme correspondant à la première fonction optique avec une première distribution gaussienne et de la partie de l'histogramme correspondant aux éléments optiques avec une deuxième distribution gaussienne, et la caractérisation au moins de la partie de l'élément faisant lentille comprend au moins la détermination du rapport d'amplitude à la valeur de puissance centrale à la fois de la première et de la deuxième distribution gaussienne et/ou de la largeur à mi-hauteur du rapport de pic à la fois de la première et de la deuxième distribution gaussienne.

7. Procédé selon l'une quelconque des revendications précédentes, dans lequel le procédé comprend en outre le filtrage de l'histogramme avec un filtre mobile.

8. Procédé selon l'une quelconque des revendications précédentes, dans lequel au moins 50 % des éléments optiques sont des microlentilles réfractives.

9. Procédé selon l'une quelconque des revendications précédentes, dans lequel au moins 50 % des éléments optiques sont des microlentilles diffusantes ou des microlentilles diffractives.

10. Procédé selon l'une quelconque des revendications précédentes, dans lequel la représentation bidimensionnelle de la puissance optique locale d'au moins une partie de l'élément faisant lentille est obtenue sur une pupille ayant un diamètre supérieur ou égal à 3 mm, et inférieur ou égal à 9 mm.

11. Procédé selon les revendications précédentes, dans lequel l'élément faisant lentille comporte une zone centrale dépourvue d'éléments optiques, la représentation bidimensionnelle de la puissance optique locale d'au moins une partie de l'élément faisant lentille est obtenue sur une pupille dont le centre se situe à une distance du centre optique de l'élément faisant lentille supérieure ou égale à la somme de la moitié du diamètre de la zone centrale de l'élément faisant lentille dépourvue d'éléments optiques et de la moitié du diamètre de la pupille.

12. Procédé de vérification de la conformité d'un élément faisant lentille fabriqué adapté à un porteur et comprenant une pluralité d'éléments optiques, chaque élément optique de la pluralité d'éléments optiques fournissant au moins une puissance optique de manière à ralentir et/ou retarder et/ou empêcher une progression de la réfraction anormale de l'œil du porteur,
dans lequel le procédé comprend :
- l'obtention de données de caractérisation relatives à au moins une caractéristique optique des éléments optiques de l'élément faisant lentille à fabriquer,
- la caractérisation des éléments optiques de l'élément faisant lentille fabriqué au moyen du procédé de l'une quelconque des revendications 1 à 11,
- la comparaison des caractéristiques des éléments optiques de l'élément faisant lentille fabriqué avec les données de caractérisation de manière à vérifier la conformité de l'élément faisant lentille fabriqué.

13. Procédé destiné à contrôler un processus de fabrication d'éléments faisant lentille pour la fabrication d'éléments faisant lentille, chaque élément faisant lentille étant adapté à un porteur et comprenant une pluralité d'éléments optiques, chaque élément optique de la pluralité d'éléments optiques fournissant au moins une puissance optique de manière à ralentir et/ou retarder et/ou empêcher une progression de la réfraction anormale de l'œil du porteur, dans lequel le procédé comprend les étapes suivantes :
a) fabrication d'un élément faisant lentille selon un processus de fabrication,
b) détermination d'au moins une caractéristique de l'élément faisant lentille fabriqué de l'étape a) selon le procédé de l'une quelconque des revendications 1 à 11,
c) enregistrement de la différence entre l'au moins une caractéristique déterminée et une valeur de référence,
d) répétition régulière des étapes a) à c) et vérification de l'évolution de la différence dans le temps,
dans lequel l'évolution d'au moins un paramètre du processus de fabrication utilisé pour fabriquer les éléments faisant lentille est vérifiée dans le temps et l'évolution dans le temps de ladite différence est corrélée à l'évolution dans le temps de l'au moins un paramètre du processus de fabrication.
